(19) Europäisches Patentamt
European Patent Office
Office européen des brevets

(11) Publication number: 0 073 074 B1

(12) # EUROPEAN PATENT SPECIFICATION

(45) Date of publication of patent specification: 25.11.87

(51) Int. Cl.⁴: **B 01 D 53/14**, B 01 D 53/36, C 01 B 17/04

(21) Application number: 82200926.2

(22) Date of filing: 20.07.82

(54) **Process for reducing the total sulphur content of a high CO2-content feed gas.**

(30) Priority: 24.08.81 US 295439

(43) Date of publication of application: 02.03.83 Bulletin 83/09

(45) Publication of the grant of the patent: 25.11.87 Bulletin 87/48

(84) Designated Contracting States: BE DE FR GB IT NL

(56) References cited:
DE-A-2 409 378
US-A-3 961 015
US-A-4 153 674
US-A-4 198 388
US-A-4 241 032

(73) Proprietor: SHELL INTERNATIONALE RESEARCH MAATSCHAPPIJ B.V.
Carel van Bylandtlaan 30
NL-2596 HR Den Haag (NL)

(72) Inventor: McNamara, Harold John, Jr.
13518 Sunswept Way
Houston Texas 77082 (US)
Inventor: Schilk, Joan Anita
23919 Huffsmith-Kohrville Road
Tomball Texas 77375 (US)

(74) Representative: Aalbers, Onno et al
P.O. Box 302
NL-2501 CH The Hague (NL)

EP 0 073 074 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a process for reducing the total sulphur content of a high $CO_2$-content feed gas stream to environmentally acceptable levels. In this process the sulphur constituents of the feed gas are converted to elemental sulphur in a Claus-type sulphur recovery unit.

In general, feedstocks for sulphur recovery units are hydrogen sulphide ($H_2S$)-containing gases produced in the regeneration step of gas purification processes. These gas purification processes, which are required to reduce the sulphur constituents (in most cases mainly $H_2S$) of industrial gases, such as refinery gas, natural gas or synthesis gas produced by the partial combustion of hydrocarbons, to acceptably low levels prior to their further use, usually involve absorbing the sulphur components of the gases in a liquid absorbent which is then regenerated to give $H_2S$-rich gases. These latter gases are then passed to a sulphur recovery unit, elemental sulphur being produced and removed. The reaction gases of such a unit are then preferably further treated to reduce the sulphur content of the gases to a very low level before the gases are finally discharged to the atmosphere. In the sulphur recovery unit the $H_2S$ is converted to elemental sulphur by the well-known Claus reaction. Sulphur recovery units of the Claus type or Claus plants are widely used in industry and are well-established.

Apart from $H_2S$, the above-mentioned industrial gases and synthesis gases often contain other sulphur constituents such as carbonyl sulphides (COS) and other organic sulphur compounds, e.g., mercaptans, which must also be removed before these gases are used. Accordingly, a suitable liquid absorbent is typically used which removes all sulphur constituents present. However, these also contain large amounts of carbon dioxide ($CO_2$). The liquid absorbents applied in the gas purification processes for the removal of $H_2S$ are generally also good absorbents for $CO_2$. For the removal of COS by means of absorption, a solvent is in practice used which is an efficient absorbent for $CO_2$. Consequently, regeneration of the fat liquid absorbent yields $H_2S$- and $CO_2$-containing gases which have then to be processed in the Claus plant.

For some gases, such as synthesis gas produced by the partial combustion of coal, the level of $CO_2$ and COS may be very high, i.e., the stream may contain more than 80% by volume of $CO_2$ and COS and less than 15% by volume of $H_2S$. This presents significant problems in the above-described typical gas processing scheme. One process supposedly for handling relatively high $CO_2$-content gas streams is described in U.S. patent specification No. 4,153,674. Two separate absorption/desorption steps are employed in this known process, one being the non-selective absorption of the feed gas and the other being the selective absorption of the reduced Claus off-gas. However, a basic problem with this known process is that for feed gas streams having a high $CO_2$- and COS-content, the total sulphur emissions from the lean gas (ex non-selective absorption) and the waste gas (ex selective absorption) would exceed environmentally acceptable levels. This is because of the contribution of COS in total sulphur emissions. A process different from this known process is required to deal with very high levels of $CO_2$ and COS in feed gas streams.

It is an object of the present invention to provide a process which will enable reducing the total sulphur content of gas streams to low levels, where the gas stream has very high contents of $CO_2$ and COS.

Another object is to provide a process for reducing the total sulphur content of a high $CO_2$-content feed gas to environmentally acceptable levels.

Accordingly, the invention provides a process for reducing the total sulphur content of a high $CO_2$-content feed gas stream to environmentally acceptable levels, which process comprises the following steps:—

a) passing a feed gas stream comprising hydrogen sulphide, carbonyl sulphide and at least 5% by volume of carbon dioxide to a first absorption step where said feed gas stream is contacted with a liquid and regenerable polyalkanolamine absorbent selective for hydrogen sulphide, therein producing an unabsorbed portion and a hydrogen sulphide-enriched polyalkanolamine absorbent;

b) passing said unabsorbed portion of the feed gas stream from step (a) together with a hydrogen- and/or carbon monoxide-containing gas, the off-gases from the associated Claus process step (e), and an amount of steam over a sulphided Group VI and/or Group VIII metal catalyst supported on an inorganic oxidic carrier in a reduction step wherein the amount of steam is adjusted to reduce the COS content in the resulting treated gas to a level below about 0.05% by volume;

c) passing the gas stream thus treated in said reduction step (b) to a second absorption step in which said treated gas stream is contacted with a liquid and regenerable polyalkanolamine absorbent under such conditions that the unabsorbed portion of said treated gas stream has below about 0.05% by volume total sulphur compounds, discharging the unabsorbed portion of said treated gas stream, optionally after incineration, into the atmosphere, and producing a hydrogen sulphide-enriched polyalkanolamine absorbent;

d) regenerating the hydrogen sulphide-enriched absorbents from absorption steps (a) and (c) by heating and/or stripping and using the regenerated absorbents for further absorption of hydrogen sulphide;

e) passing the hydrogen sulphide liberated in the regeneration step (d) to a Claus process step; and

f) passing the off-gases produced in said Claus process step (e) to said reduction step (b).

In the context of the present invention hydrogen sulphide-containing gases have a very high carbon dioxide content if they contain at least 5% by volume of carbon dioxide.

The feed gas stream treated according to the present invention may be obtained from a variety of refinery processes, industrial processes, or the partial oxidation of fuels such as coal. The feed gas streams contemplated herein have the following general composition (expressed in per cent by volume).

| | Preferred | More preferred |
|---|---|---|
| $CO_2$ | 5—95% | 40—90% |
| $H_2S$ | 0.03—20% | 0.03—10% |
| COS | 0.02—2% | 0.02—1% |

Other constituents of the feed gas stream may include $N_2$, $CH_4$, $NH_3$, CO, $H_2$ and $H_2O$. A key aspect of the present invention is the very high content of $CO_2$ and COS in the feed.

In the first step of the process, the feed gas stream is contacted with a liquid and regenerable selective solvent in a first absorption zone. The first absorption zone may comprise either a packed or a tray column. In order to decrease the co-absorption of $CO_2$ a relatively high gas velocity is applied. It is preferred to use a gas velocity between 0.5 and 3.0 m/s with respect to the aerated area of the absorption zone. "Aerated area" as used herein is synonymous to "gas flow area" or "active area" for which reference is made to Chem. Eng. Progress of March 1970, pages 50—55. It is further preferred to apply an absorption zone having less than 30 and more preferably less than 20 absorption layers. If a tray column is used, the column should have less than 30 contacting valve trays. A packed column should have less than 30 theoretical plates. The use of an absorption zone having between 5 and 15 absorption layers is particularly preferred.

The liquid and regenerable solvent is preferably an aqueous solution of a polyalkanolamine, such as di-isopropanolamine (DIPA), methyldiethanolamine (MDEA) or triethanolamine (TEA). It is much preferred that the polyalkanolamine be selective to the $H_2S$ and that it reduce the co-absorption of $CO_2$. Accordingly, a much preferred polyalkanolamine is MDEA. The alkanolamines are preferably used in aqueous solutions in a molar concentration of 0.5 to 5, preferably 1 to 3.

The unabsorbed portion of the feed gas stream, suitably comprising less than 10% of the $H_2S$ and more than about 40% of the $CO_2$ and more than about 50% of the COS in the feed gas stream (preferably more than 90% of the total of the COS and $CO_2$ in said feed gas stream), then passes to a reduction step. This reduction step involves passing the unabsorbed portion of the feed gas stream from the first absorption zone, along with the off-gas stream from the associated Claus-type process over a sulphided Group VI and/or Group VIII metal catalyst on an inorganic oxidic carrier. Groups VI and VIII refer to the Periodic Table of the Elements shown on the inside cover of "Handbook of Chemistry and Physics", 59th edition, 1978—1979. By passing this combined stream over the catalyst as defined, at the temperature range specified, all sulphur constituents of the gas mixture other than $H_2S$, including any mercaptans and/or disulphides present, will be converted to $H_2S$. $SO_2$ will be reduced by the hydrogen present, whereas COS and carbon disulphide ($CS_2$) will be hydrolyzed over the catalyst to $H_2S$ and water. Some hydrogenation of COS and $CS_2$ will also occur. Any elemental sulphur present will also be reduced to $H_2S$ under the conditions specified.

Step (b) of the process according to the present invention is preferably carried out at a temperature between 200°C and 350°C. To this end the mixture of the reaction off-gas of the sulphur recovery unit and the unabsorbed portion of the feed gas stream is passed over the said catalyst to the presence of at least the stoichiometric amount of free hydrogen- and/or free carbon monoxide(CO)-containing gas required for the complete conversion of $SO_2$ and elemental sulphur to $H_2S$. Generally, 1.3 to 2.0 times the required stoichiometric amount is applied. Higher amounts of hydrogen and/or CO are not considered for economical reasons only.

For the purposes of the present invention CO is equivalent to hydrogen in its reducing capacities, as it produces hydrogen in situ in accordance with the following reaction equation:

$$CO+H_2O \leftrightharpoons CO_2+2H$$

It has been noted that reduction of $SO_2$ with CO is a very fast reaction because of the hydrogen produced in situ. For that reason, the use of a hydrogen- and CO-containing gas is particularly preferred in step (b). A gas with a $H_2$/CO molar ratio between 9:1 and 2:8 may suitably be used, a gas with a $H_2$/CO molar ratio of about 4:1 being preferred.

The free hydrogen- and/or free CO-containing gas used may advantageously be a gas containing both compounds, such as town gas, water gas or synthesis gas. Pure hydrogen or pure CO may also be used. Suitable hydrogen-rich gases or gas mixtures are the off-gas of a catalytic reforming unit, the gas produced in a hydrogen plant or the gas obtained from a processing unit for saturated crude gases from petroleum. A free hydrogen- and free CO-containing gas may further be produced by the substoichiometric combustion of lower hydrocarbon gases such as methane, ethane, propane, butane or mixtures thereof. The production of such a gas may suitably be combined with the heating of the reaction off-gas and said $H_2S$-containing gas to the required reaction temperature, as set out hereinafter.

After having passed the last bed of the sulphur recovery unit and the relevant condenser for the recovery of elemental sulphur, the reaction off-gases normally have a temperature of from 130°C to 170°C. For the reduction stage over the Group VI and/or Group VIII metal catalyst, however, the off-gases must have a higher temperature and therefore these off-gases have first to be heated

to a temperature in excess of 170°C. The reaction off-gases are preferably heated to a temperature in the range of from 180°C to 450°C, together with the unabsorbed portion of the feed gas stream from the first absorption zone by mixing the same with a hydrogen- and CO-containing gas produced by the sub-stoichiometric combustion of a lower hydrocarbon or a mixture thereof, e.g., fuel gas, wiht an oxygen-containing gas. Mixing of the said gases may be effected in a mixing chamber following the combustion chamber of the burner used for the sub-stoichiometric combustion.

The increase in temperature to above 180°C is also important in view of the presence of small amounts of elemental sulphur in the form of a mist in the reaction off-gas. This objectionable sulphur mist disappears when the temperature is raised above the dew point of sulphur. It has also been found that as a result of raising the temperature to above 180°C, the presence of elemental sulphur in the gas phase has no adverse effect on the catalytic activity of the reduction catalyst.

After heating to a temperature in excess of 180°C, the reaction off-gas and the unabsorbed portion of the feed gas stream, together with a free hydrogen-containing and/or free CO-containing gas, are passed over a sulphided Group VI and/or Group VIII metal catalyst in order to reduce $SO_2$ to $H_2S$. At the same time, elemental sulphur and COS and/or other organic sulphur compounds are converted to $H_2S$. Although sulphided Group VI and/or Group VIII metal catalysts supported on an inorganic oxidic carrier in general are suitable, preferred reduction catalysts for carrying out the present invention are catalysts containing one or more of the metals: molybdenum, tungsten and chromium (of the Group VI metals), and/or one or more of the metals: cobalt, nickel and iron (of the Group VIII metals), a combination of one such Group VI metal and one such Group VIII metal being preferred. The inorganic oxidic carrier may be alumina, silica, magnesia, boria, thoria, zirconia or a mixture of two or more of these compounds. Most preferred reduction catalysts for use in accordance with the process of the invention are a $Ni/Mo/Al_2O_3$ or a $Co/Mo/Al_2O_3$ catalyst.

The Group VI and/or Group VIII metal catalyst is used in the sulphided form. Sulphiding may be effected beforehand by means of a suitable sulphiding agent, such as a mixture of hydrogen and $H_2S$ containing 10—15% by volume of a sulphide. It is also possible to sulphide the catalyst in situ by means of the reaction off-gas itself. Particularly suitable, however, is a sulphiding mixture comprising hydrogen, $H_2S$ and water in a molar ratio of 1:1:1, the sulphiding temperature being between 300 and 400°C. The catalyst to be sulphided may comprise the Group VI and or Group VIII metals as the oxide or as the element.

Before being contacted with the liquid absorbent for $H_2S$, the reduced gas mixture obtained in step (b) is first cooled. Preferably it is cooled to a temperature in the range of from 6° to 60°C. More preferably, cooling is effected in two steps, the first one being an indirect heat exchange and the second one a direct heat exchange with water.

After cooling, the reduced (or treated) gas mixture is contacted with a liquid and regenerable solvent in a second absorption zone. The same amine, conditions and the like employed in the first absorption zone are employed for the second absorption zone.

The unabsorbed portion of the reduced gas mixture from the second absorption column is then discharged into the atmosphere. If desired, this unabsorbed portion may also be incinerated in the usual manner and the incinerated portion be passed to the stack. The unabsorbed portion typically contains less than 0.05% by volume total sulphur compounds as $H_2S$. A key aspect of the present invention is that the sulphur level of the stream vented to the atmosphere meets the present environmental regulations.

The $H_2S$-enriched absorbents from the first and second absorption zones are regenerated by heating and/or stripping with steam. This produces an $H_2S$-enriched gas mixture and a regenerated absorbent which is re-used in steps (a) and (c) for further $H_2S$ absorption.

The $H_2S$-rich gas mixture which is freed in the regeneration of the absorbent—which absorbent also contains some coabsorbed $CO_2$ and water—is first cooled in order to condense water present therein. Normally, at least part of this water is recycled to the regeneration step in order to maintain the water content of the aqueous absorbent at the required level. After cooling, the $H_2S$-rich gas mixture is passed to the sulphur recovery unit (Claus unit) to recover elemental sulphur from the gas.

As used herein, "Claus reaction" or "Claus process" refers to the reaction between $H_2S$ and $SO_2$ in which elemental sulphur and water are produced. By "sulphur recovery unit of the Claus type" or "Claus plant" is meant a plant for carrying out the Claus reaction, incorporating a thermal zone in which $H_2S$ is partially combusted to produce $SO_2$ in the correct proportion which then reacts with the unburned $H_2S$ to give sulphur and water, the sulphur then being condensed and recovered, followed by one or more catalytic zones in which the same reaction is further promoted by measns of a suitable catalyst and additional sulphur is recovered.

The invention will be further illustrated by reference to the Figure. This Figure is a schematic flow diagram of one mode of practising this invention. Referring to the Figure, a feed gas stream emanating from a partial oxidation process is passed via a line 1 to a first absorption unit 2 where it is contacted wiht a lean liquid and regenerable polyalkanolamine absorbent supplied via a line 3, such as aqueous MDEA. This first absorption unit 2 is operated in a

selective manner to remove most of the $H_2S$, but not the $CO_2$ and COS. An unabsorbed gas stream substantially free of $H_2S$ leaves the first absorption unit 2 via a line 4. A fat solvent ($H_2S$-rich absorbent) stream exits the first absorption unit 2 via a line 5.

The unabsorbed gas stream in the line 4 is combined wiht a Claus off-gas stream supplied via a line 6 and is fed to an in-line burner and mixing chamber 7 along with steam supplied via a line 8, a reducing gas stream supplied via a line 9, a fuel gas stream supplied via a line 10, and an oxygen-containing gas stream (such as air) supplied via a line 11. In the in-line burner 7, a hydrogen- and CO-containing gas is produced by the sub-stoichiometric combustion of the hydrocarbon fuel gas. In the mixing chamber 7, the gas mixture is mixed with the hot combustion gas and a heated gas mixture, now also containing the required hydrogen and CO, is introduced via a line 12 into a reactor 13 where sulphur compounds other than $H_2S$ are converted to $H_2S$ over a reduction catalyst. The reduced gas mixture, comprising substantially as other sulphur compounds than $H_2S$, leaves the reactor 13 via a line 14 and the gas is cooled in a quench tower 15. An important aspect of the present invention is that the amount of steam added via the line 8 is adjusted such that the COS content in the reactor product in the line 14 is reduced to a low level. A portion of the quench tower bottoms is routed to a sour water stripper via a line 19, while the majority is routed via a line 16 through a cooler 17 and employed as the quench water supplied via a line 18. The cooled gas mixture is passed via a line 20 to a second absorption unit 21. In the second absorption unit 21, the gas mixture is contacted with a lean polyalkanolamine absorbent such as aqueous MDEA. The unabsorbed portion of the gas stream, comprising mainly $CO_2$ and nitrogen, is discharged from the unit 21 via a line 22. This unabsorbed portion contains less than about 0.05% by volume total sulphur compounds. Typically, the stream in the line 22 is combusted in the Claus incinerator to convert any traces of $H_2S$ to $SO_2$; the gases leaving the incinerator are vented to the atmosphere.

The fat solvent exits via the line 23 from the second absorption unit 21 and is combined with the fat solvent from the first absorption unit (supplied via the line 5). The combined fat solvent stream enters a stripper 25 via a line 24. In the stripper 25, heat and/or stripping steam is employed to remove the $H_2S$ from the fat solvent. The $H_2S$-rich gas mixture is then passed via a line 26 to a sulphur recovery unit 27 (Claus unit). The Claus unit 27 typically incorporates a thermal stage and an after-cooler/sulphur condenser and a number of catalytic stages with interstage coolers/sulphur condensers (not shown in the Figure). The $H_2S$ is converted in the Claus unit, an oxygen-containing gas being fed via a line 28 and elemental sulphur being removed via a line 29. The reaction off-gases leave the unit 27 via the line 6 and are treated as described hereinbefore.

The invention is further illustrated by reference to the following Example.

Example

This example comprises a computer simulation of a process according to the present invention. The process flow scheme employed is similar to that shown in the Figure and explained above. The feed gas stream is obtained from the partial combustion of coal (after chemical synthesis steps) and contains about 90% volume $CO_2$, 4% volume $H_2S$ and 0.1% volume COS with the remainder comprising $N_2$, $CH_4$, $NH_3$, CO, $H_2$ and $H_2O$.

The feed gas stream 1 is contacted in the first absorption column 2 with an aqueous methyldiethanolamine (MDEA) absorbent. The unabsorbed gas product exiting via line 4 contains about 93% by volume of $CO_2$, which is about 92% of the $CO_2$ in the feed gas stream 1. Over about 98% of the $H_2S$ in the feed gas stream is absorbed by the MDEA solvent. The unabsorbed gas product 4 is combined with the Claus off-gas stream 6, steam 8, reducing gas 9, fuel gas 10 and air 11 in the in-line burner and mixing chamber 7. The product gas from the mixing chamber is then passed over a Co-Mo on alumina catalyst in the reactor 13, where the $SO_2$ and COS are converted to $H_2S$ and $CO_2$. The reactor product is then quenched in a quench tower 15. The cooled gas is then routed to a second absorption unit 21 where the gas is contacted with an aqueous MDEA absorbent. The vent gas 22 from the second absorber, containing less than about 0.012% by volume of sulphur compounds as $H_2S$, is routed to the Claus plant incinerator and the gases formed by the incineration are vented to the atmosphere. The fat solvent from both the first and second absorption columns is routed to the stripper 25, where the $H_2S$-rich gas product stream is obtained. This $H_2S$-rich gas stream 26 is then routed to the Claus unit 27. The off-gases 6 from the Claus unit are routed back to the in-line burner 7.

**Claims**

1. A process for reducing the total sulphur content of a high $CO_2$-content feed gas stream to environmentally acceptable levels which process comprises the following steps:—

a) passing a feed gas stream comprising hydrogen sulphide, carbonyl sulphide and at least 5% by volume of carbon dioxide to a first absorption step where said feed gas stream is contacted with a liquid and regenerable polyalkanolamine absorbent selective for hydrogen sulphide, therein producing an unabsorbed portion and a hydrogen sulphide-enriched polyalkanolamine absorbent;

b) passing said unabsorbed portion of the feed gas stream from step (a) together with a hydrogen- and/or carbon monoxide-containing gas, the off-gases from the associated Claus process step (e), and an amount of steam over a sulphided Group VI and/or Group VIII metal catalyst

supported on an inorganic oxidic carrier in a reduction step wherein the amount of steam is adjusted to reduce the COS content in the resulting treated gas to a level below about 0.05% by volume;

c) passing the gas stream thus treated in said reduction step (b) to a second absorption step in which said treated gas stream is contacted with a liquid and regenerable polyalkanolamine absorbent under such conditions that the unabsorbed portion of said treated gas stream has below about 0.05% by volume total sulphur compounds, discharging the unabsorbed portion of said treated gas stream, optionally after incineration, into the atmosphere, and producing a hydrogen sulphide-enriched polyalkanolamine absorbent;

d) regenerating the hydrogen sulphide-enriched absorbents from absorption steps (a) and (c) by heating and/or stripping and using the regenerated absorbents for further absorption of hydrogen sulphide;

e) passing the hydrogen sulphide liberated in the regeneration step (d) to a Claus process step; and

f) passing the off-gases produced in said Claus process step (e) to said reduction step (b).

2. A process as claimed in claim 1, in which the feed gas stream contains in the range of from 0.03 to 20% by volume of hydrogen sulphide, not more than 95% by volume of carbon dioxide and in the range of from 0.02 to 2% by volume of carbonyl sulphide.

3. A process as claimed in claim 2, in which the feed gas stream contains in the range of from 0.03 to 10% by volume of hydrogen sulphide, in the range of from 40 to 90% by volume of carbon dioxide and in the range of from 0.02 to 1% by volume of carbonyl sulphide.

4. A process as claimed in any one of the preceding claims, in which the unabsorbed portion of the feed gas stream from step (a) contains less than 10% of the $H_2S$ and more than 90% of the total of the COS and $CO_2$ in said feed gas stream.

5. A process as claimed in any one of the preceding claims, in which said liquid and regenerable polyalkanolamine absorbent is aqueous methyldiethanolamine.

6. A process as claimed in any one of the preceding claims, in which said catalyst is a Co-Mo catalyst on an alumina carrier.

7. A process as claimed in any one of claims 1 to 5, in which said catalyst is a Ni-Mo catalyst on an alumina carrier.

8. A process as claimed in any one of the preceding claims, in which a temperature between 200°C and 350°C is maintained in step (b).

9. A process as claimed in any one of the preceding claims, in which the reduced gas mixture obtained in step (b) is cooled to a temperature in the range of from 6° to 60°C in two steps, the first one being an indirect heat exchange and the second one a direct heat exchange with water.

10. A process as claimed in any one of the preceding claims, in which each of the first and the second absorption zone have less than 20 absorption layers.

11. A process as claimed in any one of the preceding claims, in which a gas velocity between 0.5 and 3.0 m/s with respect to the aerated part of the absorption zone is maintained in the first and second absorption zone.

**Patentansprüche**

1. Ein Verfahren zur Herabsetzung des Gesamtschwefelgehaltes eines gasförmigen Zuspeisungsstroms mit hohem Kohlendioxidgehalt auf für den Umseltschutz tragbare Werte, welches Verfahren die folgenden Arbeitsstufen umfaßt:

a) Zuleiten eines gasförmigen Zuspaisungsstroms, welcher Schwefelwasserstoff, Carbonylsulfid und mindestens 5 Volumenprozent Kohlendioxid enthält, zu einer ersten Absorptionsstufe, in welcher besagter gasförmiger Zuspeisungsstrom mit einem flüssigen und regenerierbaren Polyalkanolamin-Absorptionsmittel kontaktiert wird, welches selektiv für Schwefelwasserstoff ist, unter Erzeugung eines nicht absorbierten Anteils und eines an Schwefelwasserstoff angereicherten Polyalkanolamin-Absorptionsmittels;

b) Leiten des besagten nicht absorbierten Anteils des gasförmigen Zuspeisungsstroms von Arbeitsstufe (a) zusammen mit einem Wasserstoff und/oder Kohlenmonoxid enthaltenden Gas, den Abgasen aus einer als Arbeitsstufe (e) angeschlossenen Claus-Verfahrensstufe und einer Menge an Dampf über einen ein sulfidiertes Metall der Gruppe VI und/oder der Gruppe VIII enthaltenden Katalysator, welcher auf einem anorganischen oxidischen Trägermaterial aufgebracht ist, in eine Reduktionsstufe, in welcher der Anteil an Dampf so eingeregelt wird, daß der COS-Gehalt des dabei erhaltenen behandelten Gases bis auf einen Wert unterhalb etwa 0,05 Volumenprozent herabgesetzt wird;

c) Weiterleiten des so behandelten Gases aus besagter Reduktionsarbeitsstufe (b) zu einer zweiten Absorptions-Arbeitsstufe, in welcher besagter behandelter Gasstrom mit einem flüssigen und regenerierbaren Polyalkanolamin-Absorptionsmittel unter solchen Bedingungen kontaktiert wird, daß der nicht absorbeirte Anteil besagten Gasstroms einen Gesamtgehalt an Schwefelverbindungen unterhalb etwa 0,05 Volumenprozent aufweist, Entlassen des nicht absorbierten Anteils besagten behandelten Gasstroms in die Atmosphäre, gegebenenfalls nach einem Verbrennungsvorgang, und Erzeugen eines an Schwefelwasserstoff angereicherten Polyalkanolamin-Absorptionsmittels;

d) Regenerieren der aus den Absorptions-Arbeitsstufen (a) und (c) erhaltenen, an Schwefelwasserstoff angereicherten Absorptionsmitteln durch Erhitzen und/oder Abstreifen und Verwendung der regenerierten Absorptionsmittel für die weitere Absorption von Schwefelwasserstoff;

e) Einspeisen des in der Regenerierungsstufe (d) freigesetzten Schwefelwasserstoffs in eine

Claus-Verfahrensstufe und

f) Einspeisen der in der Claus-Verfahrensstufe (e) erzeugten Abgase in besagte Reduktions-Arbeitsstufe (b).

2. Ein Verfahren wie in Anspruch 1 beanspricht, in welchem der gasförmige Zuspeisungsstrom Schwefelwasserstoff im Bereich von 0,03 bis 20 Volumenprozent, nicht mehr als 95 Volumenprozent Kohlendioxid und Carbonylsulfid im Bereich von 0,02 bis 2 Volumenprozent enthält.

3. Ein Verfahren wie in Anspruch 2 beansprucht, in welchem der gasförmige Zuspeisungsstrom Schwefelwasserstoff im Bereich von 0,03 bis 10 Volumenprozent, Kohlendioxid im Bereich von 40 bis 90 Volumenprozent und Carbonylsulfid im Bereich von 0,02 bis 1 Volumenprozent enthält.

4. Ein Verfahren wie in irgendeinem der vorhergehenden Ansprüche beansprucht, in welchem der nicht absorbierte Anteil des gasförmigen Zuspeisungsstroms aus Stufe (a) weniger als 10 Prozent $H_2S$ und mehr als 90 Prozent der in besagtem gasförmigen Zuspeisungsstrom insgesamt enthaltenen Anteile an COS und $CO_2$ enthält.

5. Ein Verfahren wie in irgendeinem der vorhergehenden Ansprüche beansprucht, in welchem das besagte flüssige und regenerierbare Polyalkanolamin-Absorptionsmittel wässriges Methyldiäthanolamin ist.

6. Ein Verfahren wie in irgendeinem der vorhergehenden Ansprüche beansprucht, in welchem besagter Katalysator ein Co-Mo-Katalysator auf einem Aluminiumoxidträgermaterial ist.

7. Ein Verfahren wie in irgendeinem der Ansprüche 1 bis 5 beansprucht, in welchem besagter Katalysator ein Ni-Mo-Katalysator auf eines Aluminiumoxid-Trägermaterial ist.

8. Ein Verfahren wie in irgendeinem der vorhergehenden Ansprüche beansprucht, in welchem in Arbeitsstufe (b) eine Temperatur zwischen 200°C und 350°C aufrecht erhalten wird.

9. Ein Verfahren wie in irgendinem der vorhergehenden Ansprüche beansprucht, in welchem die in Arbeitsstufe (b) erhaltene reduzierte Gasmischung in zwei Stufen auf eine Temperatur im Bereich von 6°C bis 60°C abgekühlt wird, wobei die erste Abkühlungsstufe ein indirekter Wärmeaustausch und die zweite Abkühlungsstufe ein direkter Wärmeaustausch mit Wasser ist.

10. Ein Verfahren wie in irgendeinem der vorhergehenden Ansprüche beansprucht, in welchem die erste und die zweite Absorptionszone jeweils weniger als 20 für die Absorption ausnutzbare Schichten aufweist.

11. Ein Verfahren wie in irgendeinem der vorhergehenden Ansprüche beansprucht, in welchem in der ersten und in der zweiten Absorptionszone eine Gasgeschwindigkeit zwischen 0,5 und 3,0 m/s in bezug auf den belüfteten Teil der Absorptionszone aufrecht enthalten wird.

**Revendications**

1. Procédé pour la réduction de la teneur totale en soufre d'un courant de gaz d'alimentation à haute teneur en $CO_2$, à des taux acceptables pour l'environment, ce procédé comprenant les étapes suivantes:

a) passage d'un courant de gaz d'alimentation comprenant du sulfure d'hydrogène, du sulfure de carbonyle et au moins 5% en volume de gaz carbonique vers une première étape d'adsorption dans laquelle on met ledit courant de gaz d'alimentation en contact avec un absorbant liquide et régénérable de polyalcanolamine, sélectif pour le sulfure d'hydrogène, pour y produire une portion non absorbée et un absorbant de polyalcanolamine enrichi en sulfure d'hydrogène;

b) passage de ladite portion non absorbée du courant de gaz d'alimentation provenant de l'étape (a) conjointement avec un gaz contenant de l'hydrogène et/ou de l'oxyde de carbone, les effluents gazeux provenant de l'étape associée (e) du procédé Claus, et une quantité de vapeur, sur un catalyseur d'un métal sulfuré du groupe VI et/ou du groupe VIII, fixé sur un support inorganique de type oxyde, dans une étape de réduction dans laquelle on ajuste la quantité de vapeur pour réduire la teneur en COS dans le gaz traité résultant à un taux inférieur à environ 0,05% en volume;

c) passage du courant de gaz ainsi traité dans ladite étape de réduction (b) vers une seconde étape d'absorption dans laquelle on met ledit courant de gaz traité en contact avec un absorbent liquide et régénérable de polyalcanolamine, dans des conditions telles que la portion non absorbée dudit courant de gaz traité possède moins d'environ 0,05% en volume en total des composés du soufre, émission de la portion non absorbée dudit courant de gaz traité, éventuellement après incinération, dans l'atmosphère, et production d'un absorbant de polyalcanolamine enrichi en sulfure d'hydrogène;

d) régénération des absorbants enichis en sulfure d'hydrogène provenant des étapes d'absorption en (a) et (c) par chauffage et/ou épuration, et utilisation des absorbants régénérés pour l'absorption ultérieure du sulfure d'hydrogène;

e) passage du sulfure d'hydrogène libéré dans l'étape de régénération (d) vers une étape du procédé Claus; et

f) passage des effluents gazeux produits dans ladite étape du procédé Claus (e) vers ladite étape de réduction (b).

2. Procédé selon la revendication 1, dans lequel le courant de gaz d'alimentation contient de 0,03 à 20% en volume de sulfure d'hydrogène, pas plus de 95% en volume de gaz carbonique et de 0,02 à 2% en volume de sulfure de carbonyle.

3. Procédé selon la revendication 2, dans lequel le courant de gaz d'alimentation contient de 0,03 à 10% en volume de sulfure d'hydrogène, de 40 à 90% en volume de gaz carbonique et 0,02 à 1% en volume de sulfure d'hydrogène.

4. Procédé selon l'une quelconque des revendications précédentes, dans lequel la portion non absorbée du courant de gaz d'alimentation provenant de l'étape (a) contient moins de 10% de $H_2S$ et plus et 90% du total du COS et du $CO_2$ dans ledit courant de gaz d'alimentation.

5. Procédé selon l'une quelconque des revendications précédentes, dans lequel ledit absorbent liquide et régénérable de polyalcanolamine est la méthyldiéthanolamine aqueuse.

6. Procédé selon l'une quelconque des revendications précédentes, dans lequel ledit catalyseur est un catalyseur Co-Mo sur support d'alumine.

7. Procédé selon l'une quelconque des revendications 1 à 5, dans lequel ledit catalyseur est un catalyseur Ni—Mo sur support d'alumine.

8. Procédé selon l'une quelconque des revendications précédentes, dans lequel on maintient une température comprise entre 200°C et 350°C dans l'étape (b).

9. Procédé selon l'une quelconque des revendications précédentes, dans lequel on refroidit le mélange de gaz réduit obtenu dans l'étape (b) à une température comprise dans l'intervalle allant de 6° à 60°C, en deux étapes, la première étant un échange thermique indirect et la seconde un échange thermique direct avec l'eau.

10. Procédé selon l'une quelconque des revendications précédentes, dans lequel chacune des première et seconde zones d'absorption possède moins de 20 couches d'absorption.

11. Procédé selon l'une quelconque des revendications précédentes, dans lequel on maintient une vitesse du gaz comprise entre 0,5 et 3,0 mètres par seconde, en ce qui concerne la partie aérée de la zone d'absorption, dans la première et la seconde zones d'absorption.

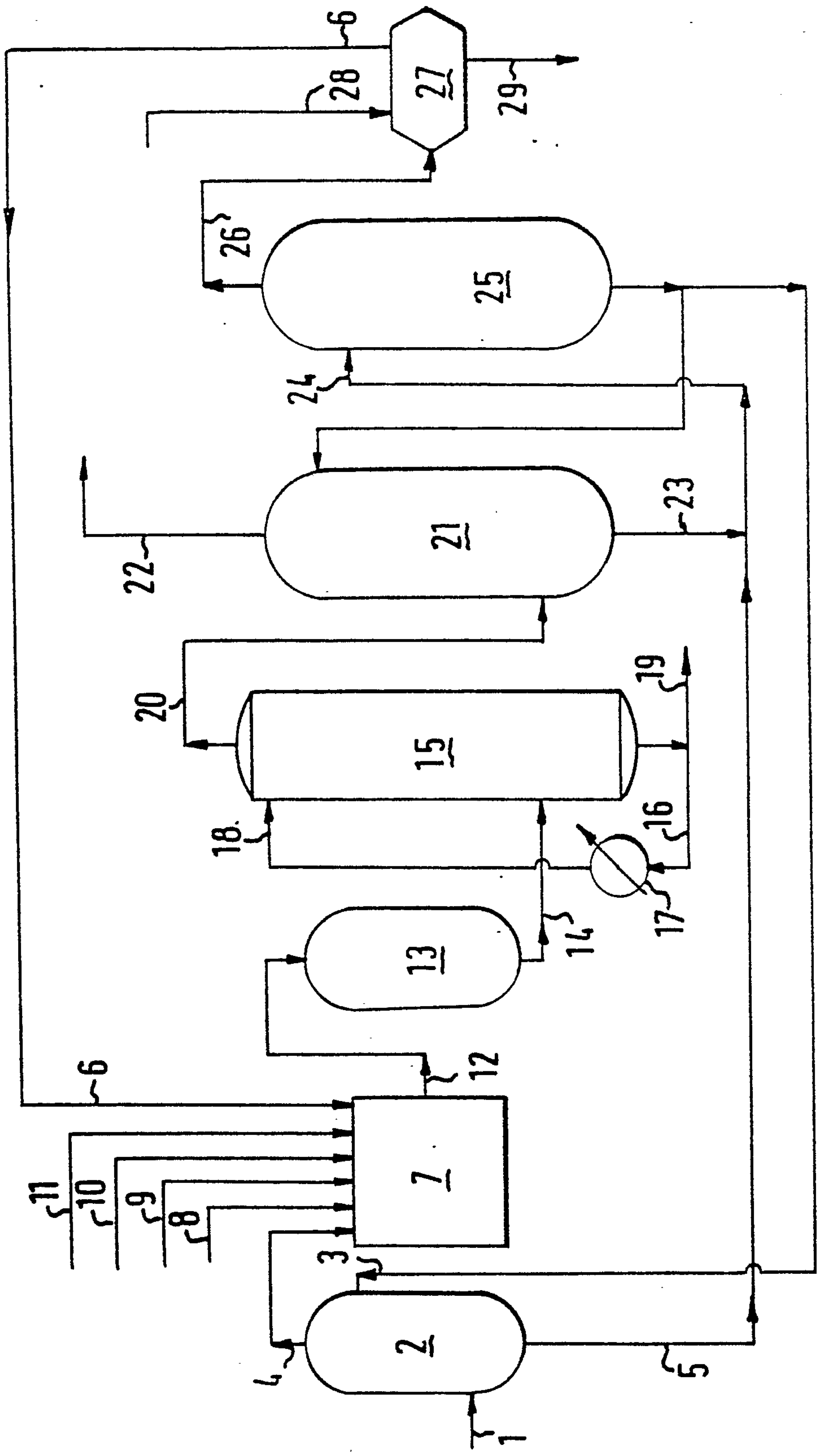
1
2
3
4
5
6
7
8
9
10
11
12
13
14
15
16
17
18
19
20
21
22
23
24
25
26
27
28
29